(19) Europäisches Patentamt / European Patent Office / Office européen des brevets

(11) **EP 2 541 943 A1**

(12) **EUROPEAN PATENT APPLICATION**
published in accordance with Art. 153(4) EPC

(43) Date of publication:
**02.01.2013 Bulletin 2013/01**

(51) Int Cl.:
*H04N 13/00* (2006.01)    *H04N 7/32* (2006.01)

(21) Application number: **11747298.5**

(22) Date of filing: **21.02.2011**

(86) International application number:
**PCT/JP2011/053742**

(87) International publication number:
**WO 2011/105337 (01.09.2011 Gazette 2011/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.02.2010  JP 2010038680**

(71) Applicant: **Nippon Telegraph And Telephone Corporation
Tokyo 100-8116 (JP)**

(72) Inventors:
• **SHIMIZU Shinya
  Musashino-shi
  Tokyo 180-8585 (JP)**
• **KIMATA Hideaki
  Musashino-shi
  Tokyo 180-8585 (JP)**
• **MATSUURA Norihiko
  Musashino-shi
  Tokyo 180-8585 (JP)**

(74) Representative: **Ilgart, Jean-Christophe et al
BREVALEX
95 rue d'Amsterdam
75378 Paris Cedex 8 (FR)**

(54) **MULTIVIEW VIDEO CODING METHOD, MULTIVIEW VIDEO DECODING METHOD, MULTIVIEW VIDEO CODING DEVICE, MULTIVIEW VIDEO DECODING DEVICE, AND PROGRAM**

(57)    A highly efficient encoding technique is realized even for a multiview video involved in local mismatches in illumination and color between cameras. A view synthesized picture corresponding to an encoding target frame is synthesized from an already encoded reference view frame taken at a reference view different from an encoding target view simultaneously with the encoding target frame at the encoding target view of a multiview video. For each processing unit region having a predetermined size, a reference region on an already encoded reference frame at the encoding target view corresponding to the view synthesized picture is searched for. A correction parameter for correcting a mismatch between cameras is estimated from the view synthesized picture for the processing unit region and the reference frame for the reference region. The view synthesized picture for the processing unit region is corrected using the estimated correction parameter. A video at the encoding target view is subjected to predictive encoding using the corrected view synthesized picture.

FIG. 1

**Description**

TECHNICAL FIELD

The present invention relates to a multiview video encoding method and a multiview video encoding apparatus for encoding a multiview picture or multiview moving pictures, a multiview video decoding method and a multiview video decoding apparatus for decoding a multiview picture or multiview moving pictures, and a program.
Priority is claimed on Japanese Patent Application No. 2010-038680, filed February 24, 2010, the content of which is incorporated herein by reference.

BACKGROUND ART

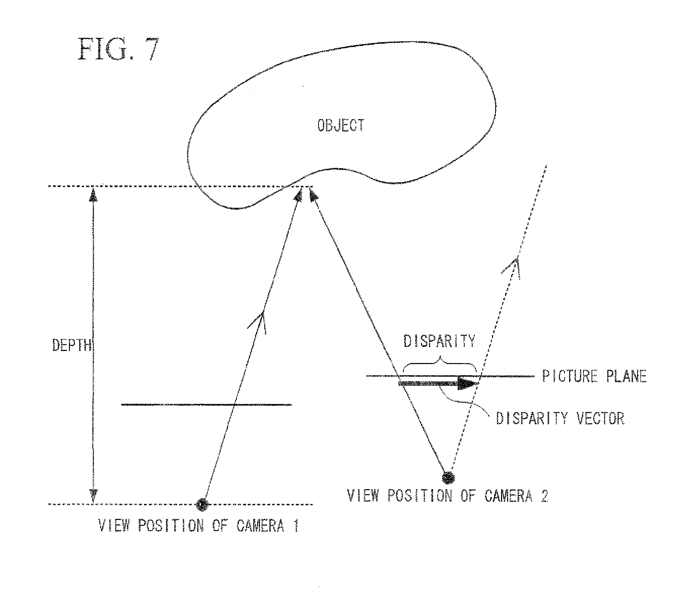

Multiview pictures are a plurality of pictures obtained by photographing the same object and its background using a plurality of cameras, and multiview moving pictures (multiview video) are moving pictures thereof. In typical video encoding, efficient encoding is realized using motion compensated prediction that utilizes a high correlation between frames at different photographed times in a video. The motion compensated prediction is a technique adopted in recent international standards of video encoding schemes represented by H.264. That is, the motion compensated prediction is a method for generating a picture by compensating for the motion of an object between an encoding target frame and an already encoded reference frame, calculating the inter-frame difference between the generated picture and the encoding target frame, and encoding the difference signal and a motion vector.
In multiview video encoding, a high correlation exists not only between frames at different photographed times but also between frames at different views. Thus, a technique called disparity compensated prediction is used in which the inter-frame difference between an encoding target frame and a picture (frame) generated by compensating for disparity between views, rather than a motion, is calculated and the difference signal and a disparity vector are encoded. The disparity compensated prediction is adopted in the international standard as H.264 Annex. H (see, for example, Non-Patent Document 1).
The disparity used herein is the difference between positions at which the same position on an object is projected on picture planes of cameras arranged in different positions and directions. In the disparity compensated prediction, encoding is performed by representing this as a two-dimensional vector. Because the disparity is information generated depending upon view positions of cameras and the distances (depths) from the cameras to the object as illustrated in FIG. 7, there is a scheme using this principle called view synthesis prediction (view interpolation prediction).
View synthesis prediction (view interpolation prediction) is a scheme that uses, as a predicted picture, a picture obtained by synthesizing (interpolating) a frame at another view which is subjected to an encoding or decoding process using part of a multiview video which has already been processed and for which a decoding result is obtained, based on a three-dimensional positional relationship between cameras and an object (for example, see Non-Patent Document 2). Usually, in order to represent a three-dimensional position of an object, a depth map (also called a range picture, a disparity picture, or a disparity map) is used which represents the distances (depths) from cameras to an object for each pixel. In addition to the depth map, polygon information of the object or voxel information of the space of the object can also be used.
It is to be noted that methods for acquiring a depth map are roughly classified into a method for generating a depth map by measurement using infrared pulses or the like and a method for generating a depth map by estimating a depth from points on a multiview video at which the same object is photographed using a triangulation principle. In view synthesis prediction, it is not a serious problem which one of the depth maps obtained by these methods is used. In addition, it is also not a serious problem where estimation is performed as long as the depth map can be obtained.
However, in general, when predictive encoding is performed, if a depth map used at an encoding side is not equal to a depth map used at a decoding side, encoding distortion called drift occurs. Thus, the depth map used at the encoding side is transmitted to the decoding side, or a method in which the encoding side and the decoding side estimate depth maps using completely the same data and technique is used.
In the disparity compensated prediction and the view synthesis prediction, if there is an individual difference between responses of imaging devices of cameras, if gain control and/or gamma correction is performed for each camera, or if there is a direction-dependent illumination effect in a scene, encoding efficiency is deteriorated. This is because prediction is performed on the assumption that the color of an object is the same in an encoding target frame and a reference frame.
As schemes studied to deal with such changes in illumination and color of an object, there is illumination compensation and color correction. These are schemes of keeping a prediction residual, which is to be encoded, small by determining a frame obtained by correcting illumination and color of a reference frame as a frame used for prediction. H.264 disclosed in Non-Patent Document 1 employs weighted prediction for performing correction using a linear function. Moreover, another scheme for performing correction using a color table has also been proposed (for example, see Non-Patent Document 3).

In addition, because mismatches in illumination and color of an object between cameras are local and are dependent on the object, it is essentially preferable to perform correction using locally different correction parameters (parameters for correction). Moreover, these mismatches are generated due to not only a mere difference in gain or the like but also a somewhat complex model such as a difference in focus. Thus, it is preferable to use a complex correction model obtained by modeling a projection process or the like, rather than a simple correction model.

Furthermore, in order to deal with a local change, it is necessary to prepare a plurality of sets of correction parameters. In general, a complex correction model is represented as a model having a great number of parameters. Thus, with an approach to transmit correction parameters, although it may be possible to improve the mismatches, it is impossible to achieve high encoding efficiency because a high bitrate is necessary.

As a method capable of dealing with locality and complexity of a mismatch without increasing the bitrate of the correction parameters, there is a technique of estimating and using correction parameters at a decoding side. For example, there is a technique of assuming that the same object is photographed in a region neighboring a processing target block, estimating correction parameters that minimize the difference between a view synthesized picture in the neighboring region and a decoded picture, and using the estimated correction parameters as correction parameters for the block (for example, see Non-Patent Document 4). In this scheme, because it is not necessary to transmit any correction parameters, even when the total number of correction parameters is increased, the generated bitrate is not increased if a mismatch can be reduced.

Prior Art Documents

Non-Patent Documents

Non-Patent Document 1: Rec. ITU-T H.264 "Advanced video coding for generic audiovisual services", March 2009.

Non-Patent Document 2: S. Shimizu, M. Kitahara, H. Kimata, K. Kamikura, and Y. Yashima, "View Scalable Multiview Video Coding Using 3-D Warping with Depth Map", IEEE Transactions on Circuits and System for Video Technology, Vol. 17, No. 11, pp. 1485-1495, November, 2007.

Non-Patent Document 3: K. Yamamoto, M. Kitahara, H. Kimata, T. Yendo, T. Fujii, M. Tanimoto, S. Shimizu, K. Kamikura, and Y. Yashima, "Multiview Video Coding Using View Interpolation and Color Correction", IEEE Transactions on Circuits and System for Video Technology, Vol. 17, No. 11, pp. 1436-1449, November, 2007.

Non-Patent Document 4: S. Shimizu, H. Kimata, and Y. Ohtani, "Adaptive Appearance Compensated View Synthesis Prediction for Multiview Video Coding", Proceedings ofICIP2009, pp. 2949-2952, November 2009.

SUMMARY OF THE INVENTION

Problems to be solved by the Invention

In the above-described conventional art, it is possible to correct a mismatch between cameras without encoding correction parameters by estimating the correction parameters using information of a neighboring block capable of being referred to during decoding. Thus, it is possible to realize efficient compression encoding of a multiview video.

However, there is a problem in that when an object different from that of the processing target block is photographed in the neighboring block, it is impossible to appropriately correct a mismatch for an object photographed in the processing target block using obtained correction parameters. Moreover, in addition to the problem that the mismatch cannot be corrected appropriately, there is also a possibility that the mismatch is increased by contraries and the encoding efficiency is deteriorated.

As a solution to this problem, it is possible to easily think of a method for encoding a flag indicating whether to perform correction for each block. However, although this method can prevent an increase in mismatch from occurring, it is impossible to significantly improve the encoding efficiency because it is necessary to encode the flag.

The present invention has been made in view of such circumstances, and an object thereof is to provide a multiview video encoding method, a multiview video decoding method, a multiview video encoding apparatus, a multiview video decoding apparatus, and a program which can realize efficient encoding/decoding of a multiview picture and multiview moving pictures without additional encoding/decoding of correction parameters even for a multiview video involved in local mismatches in illumination and color between cameras.

Means for Solving the Problems

In order to solve the above-described problems, a first aspect of the present invention is a multiview video encoding method for encoding a multiview video which includes: a view synthesized picture generation step of synthesizing, from an already encoded reference view frame taken at a reference view different from an encoding target view of the multiview video simultaneously with an encoding target frame at the encoding target view, a view synthesized picture corresponding to the encoding target frame at the encoding target view; a reference region estimation step of searching for a reference region on an already encoded reference frame at the encoding target view corresponding to the view synthesized picture for each processing unit region having a predetermined size; a correction parameter estimation step of estimating a correction parameter for correcting a mismatch between cameras from the view synthesized picture for the processing unit region and the reference frame for the reference region; a view synthesized picture correction step of correcting the view synthesized picture for the processing unit region using the estimated correction parameter; and a picture encoding step of performing predictive encoding of a video at the encoding target view using the corrected view synthesized picture.

The first aspect of the present invention may further include a degree of reliability setting step of setting a degree of reliability indicating certainty of the view synthesized picture for each pixel of the view synthesized picture, and the reference region estimation step may assign a weight to a matching cost of each pixel when the reference region on the reference frame corresponding to the view synthesized picture is searched for, based on the degree of reliability.

In the first aspect of the present invention, the correction parameter estimation step may assign a weight to a matching cost of each pixel when the correction parameter is estimated, based on the degree of reliability.

The first aspect of the present invention may further include an estimation accuracy setting step of setting estimation accuracy indicating whether or not the reference region has been accurately estimated for each pixel of the view synthesized picture, and the correction parameter estimation step may assign a weight to a matching cost of each pixel when the correction parameter is estimated, based on any one or both of the estimation accuracy and the degree of reliability.

In addition, in order to solve the above-described problems, a second aspect of the present invention is a multiview video decoding method for decoding a multiview video which includes: a view synthesized picture generation step of synthesizing, from a reference view frame taken at a reference view different from a decoding target view of the multiview video simultaneously with a decoding target frame at the decoding target view, a view synthesized picture corresponding to the decoding target frame at the decoding target view; a reference region estimation step of searching for a reference region on an already decoded reference frame at the decoding target view corresponding to the view synthesized picture for each processing unit region having a predetermined size; a correction parameter estimation step of estimating a correction parameter for correcting a mismatch between cameras from the view synthesized picture for the processing unit region and the reference frame for the reference region; a view synthesized picture correction step of correcting the view synthesized picture for the processing unit region using the estimated correction parameter; and a picture decoding step of decoding a decoding target frame subjected to predictive encoding at the decoding target view from encoded data of a video at the decoding target view using the corrected view synthesized picture as a prediction signal.

The second aspect of the present invention may further include a degree of reliability setting step of setting a degree of reliability indicating certainty of the view synthesized picture for each pixel of the view synthesized picture, and the reference region estimation step may assign a weight to a matching cost of each pixel when the reference region on the reference frame corresponding to the view synthesized picture is searched for, based on the degree of reliability.

In the second aspect of the present invention, the correction parameter estimation step may assign a weight to a matching cost of each pixel when the correction parameter is estimated, based on the degree of reliability.

The second aspect of the present invention may further include an estimation accuracy setting step of setting estimation accuracy indicating whether or not the reference region has been accurately estimated for each pixel of the view synthesized picture, and the correction parameter estimation step may assign a weight to a matching cost of each pixel when the correction parameter is estimated, based on any one or both of the estimation accuracy and the degree of reliability.

In order to solve the above-described problems, a third aspect of the present invention is a multiview video encoding apparatus for encoding a multiview video which includes: a view synthesized picture generation means for synthesizing, from an already encoded reference view frame taken at a reference view different from an encoding target view of the multiview video simultaneously with an encoding target frame at the encoding target view, a view synthesized picture corresponding to the encoding target frame at the encoding target view; a reference region estimation means for searching for a reference region on an already encoded reference frame at the encoding target view corresponding to the view synthesized picture synthesized by the view synthesized picture generation means for each processing unit region having a predetermined size; a correction parameter estimation means for estimating a correction parameter for correcting a mismatch between cameras from the view synthesized picture for the processing unit region and the reference frame for the reference region searched for by the reference region estimation means; a view synthesized picture correction means for correcting the view synthesized picture for the processing unit region using the correction parameter estimated by the correction parameter estimation means; and a picture encoding means for performing predictive encoding of a video at the encoding target view using the view synthesized picture corrected by the view synthesized picture correction means.

The third aspect of the present invention may further include a degree of reliability setting means for setting a degree of reliability indicating certainty of the view synthesized picture for each pixel of the view synthesized picture synthesized by the view synthesized picture generation means, and the reference region estimation means may assign a weight to a matching cost of each pixel when the reference region on the reference frame corresponding to the view synthesized picture is searched for, based on the degree of reliability set by the degree of reliability setting means.

In the third aspect of the present invention, the correction parameter estimation means may assign a weight to a matching cost of each pixel when the correction parameter is estimated, based on the degree of reliability set by the degree of reliability setting means.

The third aspect of the present invention may further include an estimation accuracy setting means for setting estimation accuracy indicating whether or not the reference region has been accurately estimated for each pixel of the view synthesized picture synthesized by the view synthesized picture generation means, and the correction parameter estimation means may assign a weight to a matching cost of each pixel when the correction parameter is estimated, based on any one or both of the estimation accuracy set by the estimation accuracy setting means and the degree of reliability set by the degree of reliability setting means.

In order to solve the above-described problems, a fourth aspect of the present invention is a multiview video decoding apparatus for decoding a multiview video which includes: a view synthesized picture generation means for synthesizing, from a reference view frame taken at a reference view different from a decoding target view of the multiview video simultaneously with a decoding target frame at the decoding target view, a view synthesized picture corresponding to the decoding target frame at the decoding target view; a reference region estimation means for searching for a reference region on an already decoded reference frame at the decoding target view corresponding to the view synthesized picture synthesized by the view synthesized picture generation means for each processing unit region having a predetermined size; a correction parameter estimation means for estimating a correction parameter for correcting a mismatch between cameras from the view synthesized picture for the processing unit region and the reference frame for the reference region searched for by the reference region estimation means; a view synthesized picture correction means for correcting the view synthesized picture for the processing unit region using the correction parameter estimated by the correction parameter estimation means; and a picture decoding means for decoding a decoding target frame subjected to predictive encoding at the decoding target view from encoded data of a video at the decoding target view using the view synthesized picture corrected by the view synthesized picture correction means as a prediction signal.

In order to solve the above-described problems, a fifth aspect of the present invention is a program for causing a computer of a multiview video encoding apparatus for encoding a multiview video to execute: a view synthesized picture generation function of synthesizing, from an already encoded reference view frame taken at a reference view different from an encoding target view of the multiview video simultaneously with an encoding target frame at the encoding target view, a view synthesized picture corresponding to the encoding target frame at the encoding target view; a reference region estimation function of searching for a reference region on an already encoded reference frame at the encoding target view corresponding to the view synthesized picture for each processing unit region having a predetermined size; a correction parameter estimation function of estimating a correction parameter for correcting a mismatch between cameras from the view synthesized picture for the processing unit region and the reference frame for the reference region; a view synthesized picture correction function of correcting the view synthesized picture for the processing unit region using the estimated correction parameter; and a picture encoding function of performing predictive encoding of a video at the encoding target view using the corrected view synthesized picture.

In order to solve the above-described problems, a sixth aspect of the present invention is a program for causing a computer of a multiview video decoding apparatus for decoding a multiview video to execute: a view synthesized picture generation function of synthesizing, from a reference view frame taken at a reference view different from a decoding target view of the multiview video simultaneously with a decoding target frame at the decoding target view, a view synthesized picture corresponding to the decoding target frame at the decoding target view; a reference region estimation function of searching for a reference region on an already decoded reference frame at the decoding target view corresponding to the view synthesized picture for each processing unit region having a predetermined size; a correction parameter estimation function of estimating a correction parameter for correcting a mismatch between cameras from the view synthesized picture for the processing unit region and the reference frame for the reference region; a view synthesized picture correction function of correcting the view synthesized picture for the processing unit region using the estimated correction parameter; and a picture decoding function of decoding a decoding target frame subjected to predictive encoding at the decoding target view from encoded data of a video at the decoding target view using the corrected view synthesized picture as a prediction signal.

Advantageous Effects of the Invention

With the present invention, it is possible to realize efficient encoding/decoding of a multiview picture and multiview moving pictures without additional encoding/decoding of correction parameters even when mismatches in illumination and/or color between cameras are generated locally.

BRIEF DESCRIPTION OF THE DRAWINGS

FIG. 1 is a block diagram illustrating a configuration of a multiview video encoding apparatus in a first embodiment of the present invention.

FIG. 2 is a block diagram illustrating a configuration of a view synthesized picture correction unit 108 of a multiview video encoding apparatus 100 in the first embodiment.

FIG. 3 is a flowchart describing an operation of the multiview video encoding apparatus 100 in the first embodiment.

FIG. 4 is a block diagram illustrating a configuration of a multiview video decoding apparatus in a second embodiment of the present invention.

FIG. 5 is a block diagram illustrating a configuration of a view synthesized picture correction unit 208 of a multiview video decoding apparatus 200 in the second embodiment.

FIG. 6 is a flowchart describing an operation of the multiview video decoding apparatus 200 in the second embodiment.

FIG. 7 is a conceptual diagram illustrating disparity generated between cameras in the conventional art.

MODES FOR CARRYING OUT THE INVENTION

In embodiments of the present invention, a corresponding region on an already encoded frame corresponding to a currently processed region is obtained using a generated view synthesized picture, and illumination and/or color of the view synthesized picture is corrected using a video signal of the corresponding region in the encoded frame as a reference. In the embodiments of the present invention, a correction parameter is obtained on the assumption that mismatches in color and illumination that are dependent on an object does not temporally have a large change, rather than the assumption used in the conventional technique that the same object is photographed in a neighboring region. In general, there is necessarily a region where the conventional assumption fails because a frame includes a plurality of objects. In contrast, the embodiments of the present invention effectively function because a mismatch does not temporally change as long as a scene does not abruptly change due to a scene change or the like. That is, it is possible to perform correction of reducing a mismatch even in a region for which the conventional technique has failed to perform correction, and it is possible to realize efficient multiview video encoding.

Hereinafter, the embodiments of the present invention will be described with reference to the drawings.

It is to be noted that in the following description, information (a coordinate value or an index capable of being associated with the coordinate value) capable of specifying a position inserted between symbols [ ], is appended to a video (frame), thereby representing a video signal sampled with respect to a pixel at the position.

A. First Embodiment

First, a first embodiment of the present invention will be described.

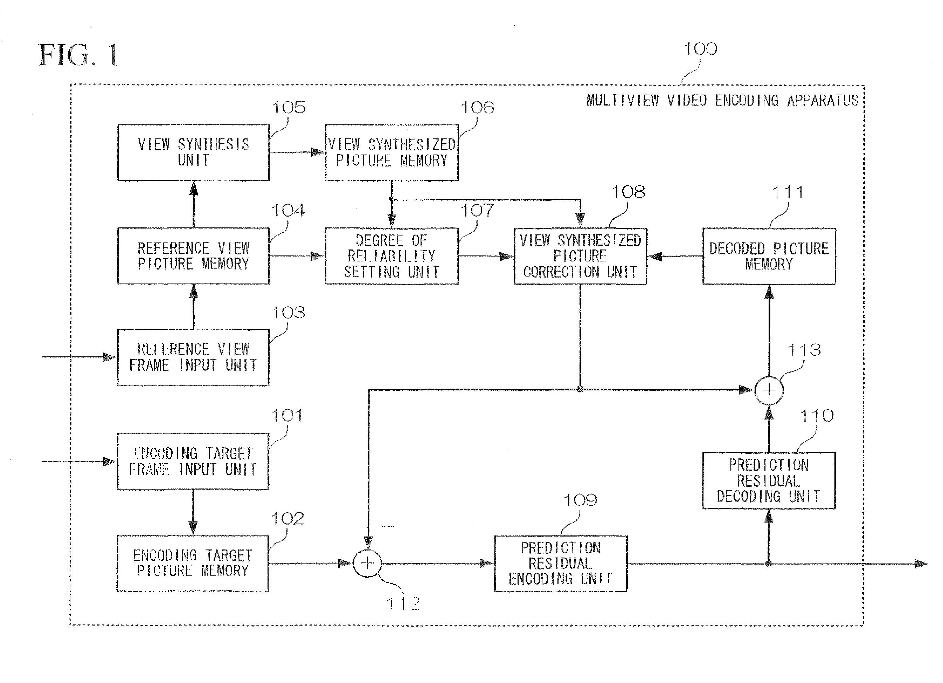

FIG. 1 is a block diagram illustrating a configuration of a multiview video encoding apparatus in the first embodiment of the present invention. In FIG. 1, the multiview video encoding apparatus 100 is provided with an encoding target frame input unit 101, an encoding target picture memory 102, a reference view frame input unit 103, a reference view picture memory 104, a view synthesis unit 105, a view synthesized picture memory 106, a degree of reliability setting unit 107, a view synthesized picture correction unit 108, a prediction residual encoding unit 109, a prediction residual decoding unit 110, a decoded picture memory 111, a prediction residual calculation unit 112, and a decoded picture calculation unit 113.

The encoding target frame input unit 101 inputs a video frame (encoding target frame) serving as an encoding target. The encoding target picture memory 102 stores the input encoding target frame. The reference view frame input unit 103 inputs a reference video frame (reference view frame) for a view (reference view) different from that of the encoding target frame. The reference view picture memory 104 stores the input reference view frame. The view synthesis unit 105 generates a view synthesized picture corresponding to the encoding target frame using the reference view frame. The view synthesized picture memory 106 stores the generated view synthesized picture.

The degree of reliability setting unit 107 sets a degree of reliability for each pixel of the generated view synthesized picture. The view synthesized picture correction unit 108 corrects a mismatch between cameras of the view synthesized picture, and outputs a corrected view synthesized picture. The prediction residual calculation unit 112 generates the difference (prediction residual signal) between the encoding target frame and the corrected view synthesized picture. The prediction residual encoding unit 109 encodes the generated prediction residual signal and outputs encoded data. The prediction residual decoding unit 110 performs decoding on the encoded data of the prediction residual signal. The decoded picture calculation unit 113 generates a decoded picture of the encoding target frame by summing the decoded prediction residual signal and the corrected view synthesized picture. The decoded picture memory 111 stores the generated decoded picture.

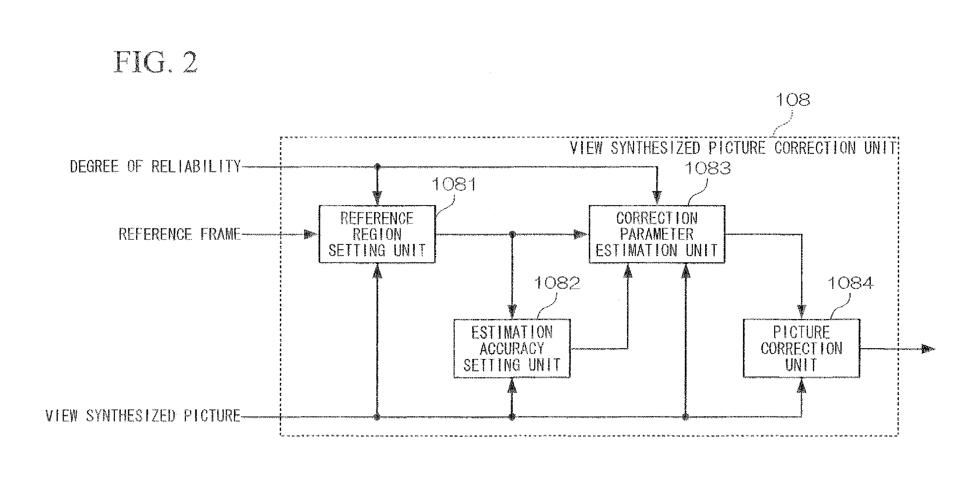

FIG. 2 is a block diagram illustrating a configuration of the view synthesized picture correction unit 108 of the multiview video encoding apparatus 100 in the first embodiment. In FIG. 2, the view synthesized picture correction unit 108 of the first embodiment is provided with a reference region setting unit 1081 which searches for a block on a reference frame corresponding to an encoding target block using the view synthesized picture as a reference region, an estimation accuracy setting unit 1082 which sets estimation accuracy indicating whether or not a corresponding region has been accurately set for each pixel of the reference region, a correction parameter estimation unit 1083 which estimates a parameter for correcting a mismatch between cameras in the view synthesized picture, and a picture correction unit 1084 which corrects the view synthesized picture based on the obtained correction parameter.

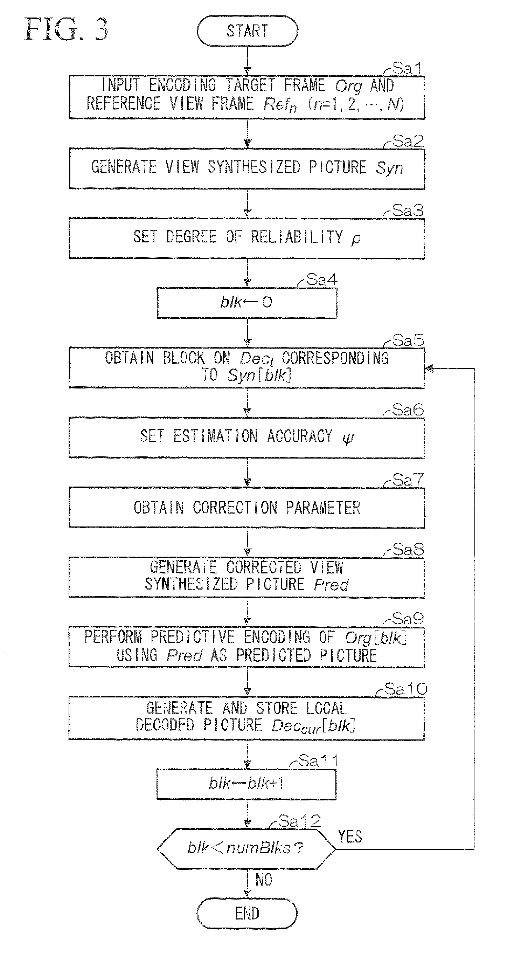

FIG. 3 is a flowchart describing an operation of the multiview video encoding apparatus 100 in the first embodiment. A process executed by the multiview video encoding apparatus 100 will be described in detail based on this flowchart.

First, an encoding target frame $Org$ is input by the encoding target frame input unit 101 and stored in the encoding target picture memory 102 (step Sa1). In addition, a reference view frame $Ref_n$ ($n=1, 2, ..., N$) taken at a reference view simultaneously with the encoding target frame $Org$ is input by the reference view frame input unit 103, and stored in the reference view picture memory 104 (step Sa1). Here, the input reference view frame is assumed to be obtained by decoding an already encoded picture. This is to prevent encoding noise such as drift from being generated, by using the same information as information that can be obtained at a decoding apparatus. However, when the generation of encoding noise is allowed, an original picture before encoding may be input. It is to be noted that $n$ is an index indicating a reference view and $N$ is the number of available reference views.

Next, the view synthesis unit 105 synthesizes a picture taken at the same view simultaneously with the encoding target frame from information of the reference view frame, and stores the generated view synthesized picture $Syn$ in the view synthesized picture memory 106 (step Sa2). Any method can be used as a method for generating the view synthesized picture $Syn$. For example, if depth information for the reference view frame is given in addition to video information of the reference view frame, it is possible to use a technique disclosed in Non-Patent Document 2 described above, Non-Patent Document 5 (Y. Mori, N. Fukushima, T. Fujii, and M. Tanimoto, "View Generation with 3D Warping Using Depth Information for FTV", Proceedings of 3DTV CON2008, pp. 229-232, May 2008), or the like.

In addition, if depth information for the encoding target frame has been obtained, it is also possible to use a technique disclosed in Non-Patent Document 6 (S. Yea and A. Vetro, "View Synthesis Prediction for Rate-Overhead Reduction in FTV", Proceedings of 3DTV-CON2008, pp. 145-148, May 2008) or the like. If no depth information is obtained, it is possible to generate a view synthesized picture by applying the above-described technique after creating depth information for the reference view frame or the encoding target frame using a technique called a stereo method or a depth estimation method disclosed in Non-Patent Document 7 (J. Sun, N. Zheng, and H. Shum, "Stereo Matching Using Belief Propagation", IEEE Transactions on Pattern Analysis and Machine Intelligence, Vol. 25, No. 7, pp. 787-800, July 2003) or the like (Non-Patent Document 8: S. Shimizu, Y Tonomura, H. Kimata, and Y. Ohtani, "Improved View Interpolation Prediction for Side Information in Multiview Distributed Video Coding", Proceedings of ICDSC2009, August 2009). Also, there is a method for directly generating a view synthesized picture from the reference view frame without explicitly generating depth information (Non-Patent Document 3 described above).

It is to be noted that when these techniques are used, camera parameters that represent a positional relationship between cameras and projection processes of the cameras are basically required. These camera parameters can also be estimated from the reference view frame. It is to be noted that if the decoding side does not estimate the depth information, the camera parameters, and so on, it is necessary to encode and transmit these pieces of additional information used in the encoding apparatus.

Next, the degree of reliability setting unit 107 generates a degree of reliability p indicating the certainty that synthesis for each pixel of the view synthesized picture was able to be realized (step Sa3). In the first embodiment, the degree of reliability $p$ is assumed to be a real number of 0 to 1; however, the degree of reliability may be represented in any way as long as the larger its value is, the higher the degree of reliability is. For example, the degree of reliability may be represented as an 8-bit integer that is greater than or equal to 1.

As the degree of reliability p, any degree of reliability may be used as long as it can indicate how accurately synthesis has been performed as described above. For example, the simplest method involves using the variance value of pixel values of pixels on a reference view frame corresponding to pixels of a view synthesized picture. The closer the pixel values of the corresponding pixels, the higher the accuracy that view synthesis has been performed because the same object was able to be identified, and thus the smaller the variance is, the higher the degree of reliability is. That is, the degree of reliability is represented by the reciprocal of the variance. When a pixel of each reference view frame used to synthesize a view synthesized picture $Syn[p]$ is denoted by $Ref_n[p_n]$, it is possible to represent the degree of reliability using the following Equation (1) or (2).

[Formula 1]

$$\rho[p] = \frac{1}{\max(\operatorname{var}1(p), 1)} \quad \cdots\cdots\cdots (1)$$

[Formula 2]

$$\rho[p] = \frac{1}{\max(\operatorname{var}2(p), 1)} \quad \cdots\cdots\cdots (2)$$

Because the minimum value of variance is 0, it is necessary to define the degree of reliability using a function $max$. It is to be noted that $max$ is a function that returns the maximum value for a given set. In addition, the other functions are represented by the following Equations (3).

[Formula 3]

$$\operatorname{var}1(p) = \frac{\sum_n \left| \operatorname{Ref}_n[p_n] - ave(p) \right|}{N},$$

$$\operatorname{var}2(p) = \frac{\sum_n \left( \operatorname{Ref}_n[p_n] - ave(p) \right)^2}{N},$$

$$ave(p) = \frac{\sum_n \operatorname{Ref}_n[p_n]}{N} \quad \cdots\cdots\cdots (3)$$

In addition to the variance, there is also a method using the difference $diff(p)$ between the maximum value and the minimum value of pixels of a corresponding reference view frame represented by the following Equation (4). In addition, the degree of reliability may be defined using an exponential function as shown in the following Equation (4)', instead of a reciprocal of a variance. It is to be noted that a function *f* may be any of *var1, var2,* and *diff* described above. In this case, it is possible to define the degree of reliability even when 0 is included in the range of the function *f*.

[Formula 4]

$$\rho[p] = \frac{1}{\max(diff(p),1)} \quad \cdots\cdots\cdots\cdots (4)$$

$$\rho[p] = \frac{1}{e^{f(p)}} \quad \cdots\cdots\cdots\cdots (4)'$$

Although these methods are simple, the optimum degree of reliability is not constantly obtained because generation of occlusion is not considered. Accordingly, in consideration of the generation of occlusion, a reference view frame may be clustered based on pixel values of corresponding pixels, and a variance value or the difference between a maximum value and a minimum value may be calculated and used for the pixel values of the corresponding pixels of the reference view frame that belong to the largest cluster.

Furthermore, as another method, the degree of reliability may be defined using a probability value corresponding to an error amount of each pixel obtained by *diff* of Equation (4) described above or the like by assuming that errors between corresponding points of views follow a normal distribution or a Laplace distribution and using the average value or the variance value of the distribution as a parameter. In this case, a model of the distribution, its average value, and its variance value that are pre-defined may be used, or information of the used model may be encoded and transmitted. In general, if an object has uniform diffuse reflection, the average value of the distribution can be theoretically considered to be 0, and thus the model may be simplified.

In addition, assuming that an error amount of a pixel value of a corresponding pixel is minimized in the vicinity of a depth at which a corresponding point is obtained when a view synthesized picture is generated, it is possible to use a method for estimating an error distribution model from a change in the error amount when a depth is minutely varied and for defining the degree of reliability using the error distribution model itself or a value based on the error distribution model and the pixel value of the corresponding pixel on a reference view frame when the view synthesized picture is generated.

As a definition using only the error distribution model, there is a method for defining the degree of reliability as a probability that an error falls within a given range when the probability that the error is generated follows the error distribution. As a definition using the error distribution model and the pixel value of the corresponding pixel on the reference view frame when the view synthesized picture is generated, there is a method for assuming that a probability that an error is generated follows an estimated error distribution and for defining the degree of reliability as a probability that a situation represented by the pixel value of the corresponding pixel on the reference view frame when the view synthesized picture is generated occurs.

Furthermore, as still another method, a probability value for a disparity (depth) obtained by using a technique (Non-Patent Document 7 described above) called belief propagation when a disparity (depth) that is necessary to perform view synthesis is estimated may be used as the degree of reliability. In addition to the belief propagation, in the case of a depth estimation algorithm which internally calculates the certainty of a solution for each pixel of the view synthesized picture, it is possible to use its information as the degree of reliability.

If a corresponding point search, a stereo method, or depth estimation is performed when the view synthesized picture is generated, part of a process of obtaining corresponding point information or depth information may be the same as part of calculation of the degrees of reliability. In such cases, it is possible to reduce the amount of computation by simultaneously performing the generation of the view synthesized picture and the calculation of the degree of reliability.

When the calculation of the degrees of reliability ends, the encoding target frame is divided into blocks and a video signal of the encoding target frame is encoded while correcting a mismatch between cameras of the view synthesized picture by the view synthesis image correction unit 108 for each region (steps Sa4 to Sa12). That is, when an index of an encoding target block is denoted by *blk* and the total number of encoding target blocks is denoted by *numBlks,* after *blk* is initialized to 0 (step Sa4), the following process (steps Sa5 to Sa10) is iterated until *blk reaches numBlks* (step Sa12) while incrementing *blk* by 1 (step Sa11).

It is to be noted that if it is possible to perform the generation of the view synthesized picture and the calculation of the degree of reliability described above for each encoding target block, these processes can also be performed as part of a process iterated for each encoding target block. For example, this includes the case in which depth information for the encoding target block is given.

In the process iterated for each encoding target block, first, the reference region setting unit 1081 finds a reference region, which is a block on a reference frame corresponding to a block *blk,* using the view synthesized picture (step Sa5). Here, the reference frame is a local decoded picture obtained by performing decoding on data that has already been encoded. Data of the local decoded picture is data stored in the decoded picture memory 111.

It is to be noted that the local decoded picture is used to prevent encoding distortion called drift from being generated, by using the same data as data capable of being acquired at the same timing at the decoding side. If the generation of the encoding distortion is allowed, it is possible to use an input frame encoded before the encoding target frame, instead of the local decoded picture.

A reference region obtaining process is a process of obtaining a corresponding block that maximizes a goodness of fit or minimizes a degree of divergence on a local decoded picture stored in the decoded picture memory 111 by using the view synthesized picture *Syn[blk]* as a template. In the first embodiment, a matching cost indicating a degree of divergence is used. The following Equations (5) and (6) are specific examples of the matching cost indicating the degree of divergence.

[Formula 5]

$$Cost(vec, t) = \sum_{p \in blk} \rho[p] \cdot \left| Syn[p] - Dec_t[p + vec] \right| \qquad \cdots\cdots\cdots (5)$$

[Formula 6]

$$Cost(vec, t) = \sum_{p \in blk} \rho[p] \cdot \left( Syn[p] - Dec_t[p + vec] \right)^2 \qquad \cdots\cdots\cdots (6)$$

Here, *vec* is a vector between corresponding blocks, and *t* is an index value indicating one of local decoded pictures *Dec* stored in the decoded picture memory 111. In addition to these, there is a method using a value obtained by transforming the difference value between the view synthesized picture and the local decoded picture using a discrete cosine transform (DCT), an Hadamard transform, or the like. When the transform is denoted by a matrix *A*, it can be represented by the following Equation (7) or (8). It is to be noted that $\|X\|$ denotes a norm of *X*.

[Formula 7]

$$Cost(vec, t) = \left\| \rho[blk] \cdot A \cdot \left( Syn[blk] - Dec_t[blk + vec] \right) \right\| \qquad \cdots\cdots (7)$$

[Formula 8]

$$Cost(vec, t) = \left\| \rho[blk] \cdot A \cdot \left( \left| Syn[blk] - Dec_t[blk + vec] \right| \right) \right\| \quad \cdots \cdots (8)$$

That is, a pair of *(best_vec, best_t)* represented by the following Equation (9) is obtained by these processes of obtaining a block that minimizes the matching cost. Here, *argmin* denotes a process of obtaining a parameter that minimizes a given function. A set of parameters to be derived is a set that is shown below *argmin.*
[Formula 9]

$$(best\_vec, best\_t) = \arg\min_{vec, t} (Cost(vec, t)) \quad \cdots \cdots (9)$$

Any method can be used as a method for determining the number of frames to be searched, a search range, the search order, and termination of a search. However, it is necessary to use the same ones as those at the decoding side so as to accurately perform decoding. It is to be noted that the search range and the termination method significantly affects a computation cost. As a method for providing high matching accuracy using a smaller search range, there is a method for appropriately setting a search center. As an example, there is a method for setting, as a search center, a corresponding point represented by a motion vector used in a corresponding region on a reference view frame.
In addition, as another method for reducing a computation cost required for a search at the decoding side, there is a method for limiting a target frame to be searched. A method for determining a target frame to be searched may be pre-defined. For example, this includes a method for determining a frame for which encoding has most recently ended as a search target. In addition, as another method for limiting the search target frame, there is also a method for encoding information indicating which frame is a target and for notifying the decoding side of the encoded information. In this case, it is necessary for the decoding side to have a mechanism for decoding information such as an index value indicating a search target frame and for determining the search target frame based thereon.
In the first embodiment, one block corresponding to the encoding target block *blk* is obtained. However, necessary data is a prediction value of a video signal of the encoding target block represented using a video signal of a temporally different frame. Thus, a video signal created by obtaining pixels corresponding to respective pixels within the encoding target block *blk* and arranging them to form a block may be used as a reference region. In addition, a plurality of blocks corresponding to the encoding target block *blk* may be set and a video signal represented by the average value of video signals in the plurality of blocks may be used as a reference region. By doing so, when noise is superposed on the search target frame and when search accuracy is low, it is possible to reduce their influences and more robustly set the reference region.
When a reference region *Ref[blk] (=Dec_t[blk+vec])* is determined, the estimation accuracy setting unit 1082 sets estimation accuracy $\psi$ indicating how accurately the reference region has been obtained for each pixel of the reference region *Ref[blk]* (step Sa6). Although any value may be used for the estimation accuracy, it is possible to use a value dependent upon an error amount between corresponding pixels in the view synthesized picture and the reference frame. For example, there is the reciprocal of a square error or the reciprocal of the absolute value of an error represented by Equation (10) or (11) and the negative value of a square error or the negative value of the absolute value of an error represented by Equation (12) or (13). In addition, as another example, a probability corresponding to the difference between picture signals of the obtained corresponding pixels may be used as the estimation accuracy on the assumption that the error follows the Laplace distribution or the like. Parameters of the Laplace distribution or the like may be separately given, or they may be estimated from the distribution of errors calculated when the reference region is estimated. Equation (14) is an example in which the Laplace distribution having an average of 0 is used, and $\phi$ is a parameter.
[Formula 10]

$$\psi[blk] = 1/\left(\left(Syn[blk] - \mathrm{Ref}[blk]\right)^2 + 1\right) \qquad \cdots\cdots\cdots (10)$$

[Formula 11]

$$\psi[blk] = 1/\left(\left|Syn[blk] - \mathrm{Re\,f}[blk]\right| + 1\right) \qquad \cdots\cdots\cdots (11)$$

[Formula 12]

$$\psi[blk] = -\left(Syn[blk] - \mathrm{Re\,f}[blk]\right)^2 \qquad \cdots\cdots\cdots (12)$$

[Formula 13]

$$\psi[blk] = -\left|Syn[blk] - \mathrm{Ref}[blk]\right| \qquad \cdots\cdots\cdots (13)$$

[Formula 14]

$$\psi[blk] = \frac{1}{2\phi} \exp\left(-\frac{\left|Syn[blk] - \mathrm{Ref}[blk]\right|}{\phi}\right) \qquad \cdots\cdots\cdots (14)$$

When the setting of the estimation accuracy ends, the correction parameter estimation unit 1083 estimates correction parameters for correcting the view synthesized picture *Syn*[*blk*] (step Sa7). Although any correction method and any method for estimating the correction parameters may be used, it is necessary to use the same methods as those that are used at the decoding side.

Examples of the correction methods are correction using an offset value, correction using a linear function, and gamma correction. When a value before correction is denoted by *in* and a value after the correction is denoted by *out,* they can be represented by the following Equations (15), (16), and (17).

[Formula 15]

$$out = in + offset \qquad \cdots\cdots\cdots (15)$$

[Formula 16]

$$out = \alpha \cdot in + \beta \qquad \cdots\cdots\cdots (16)$$

[Formula 17]

$$out = (in - a)^{1/\gamma} + b \qquad \cdots\cdots\cdots (17)$$

In these examples, *offset, (α, β)*, and *(γ, a, b)* are correction parameters. Assuming that a picture signal of an object photographed in the encoding target block *blk* does not temporally change, the value before the correction is a picture signal of a view synthesized picture, and an ideal value after the correction is a picture signal of a reference region. That is, highly accurate correction can be performed by obtaining correction parameters so that a matching cost represented by a degree of divergence between these two picture signals is small. It is to be noted that when the matching cost is represented by a goodness of fit between the two picture signals, parameters are obtained so that the matching cost is maximized.

That is, when a function representing a correction process is denoted by *F* and a matching cost function representing the degree of divergence between the two picture signals is denoted by *C*, a process of obtaining the correction parameters can be represented by the following Equation (18).

[Formula 18]

$$\underset{par_F}{argmin} \sum_{p \in blk} C\big(Ref[p], F(Syn[p])\big) \qquad \cdots\cdots\cdots (18)$$

Here, *par$_F$* denotes a set of correction parameters of the correction method F, and *argmin* denotes a process of obtaining the parameters that minimizes a given function. A set of parameters to be derived is the set that is shown below *argmin*. Although any matching cost may be used, for example, it is possible to use the square of the difference between two signals. In addition, in the matching cost, weighting may be performed for each pixel using degrees of reliability of a view synthesized picture, estimation accuracy of a reference region, or both. In the case in which the square of the difference between the two signals is used as the degree of divergence, the following Equations (19), (20), (21), and (22) represent examples of the matching cost function when no weighting is performed, when weighting is performed using a degree of reliability of a view synthesized picture, when weighting is performed using estimation accuracy of a reference region, and when weighting is performed using both the degree of reliability of the view synthesized picture and the estimation accuracy of the reference region, respectively.

[Formula 19]

$$C\big(Ref[p], F(Syn[p])\big) = \big(Ref[p] - F(Syn[p])\big)^2 \cdots\cdots\cdots (19)$$

[Formula 20]

$$C\big(Ref[p], F(Syn[p])\big) = \rho[p] \cdot \big(Ref[p] - F(Syn[p])\big)^2 \cdots\cdots\cdots (20)$$

[Formula 21]

$$C\big(Ref[p], F(Syn[p])\big) = \psi[p] \cdot \big(Ref[p] - F(Syn[p])\big)^2 \cdots\cdots\cdots (21)$$

[Formula 22]

$$C\big(Ref[p], F(Syn[p])\big) = \rho[p] \cdot \psi[p] \cdot \big(Ref[p] - F(Syn[p])\big)^2 \cdots\cdots\cdots (22)$$

For example, when Equation (22) is used as the matching cost function in the correction using an offset value, it is possible to obtain *offset* using the following Equation (23).
[Formula 23]

$$offset = \frac{\sum_{p \in blk}\big(Ref[p] - Syn[p]\big) \cdot \rho(p) \cdot \psi(p)}{\sum_{p \in blk} \rho(p) \cdot \psi(p)} \quad\cdots\cdots\cdots (23)$$

When the correction is performed using a linear function, it is possible to derive parameters that minimize the square error using the least square method.
It is to be noted that these correction parameters may be determined for each illumination signal and for each chrominance signal, or they may be determined for each color channel such as RGB. In addition, it is possible to subdivide each channel and perform different correction for each fixed range (for example, correction is performed using different correction parameters in a range of 0 to 127 and a range of 128 to 255 of the R channel).
When the estimation of the correction parameters ends, the picture correction unit 1084 corrects the view synthesized picture for the block *blk* based on the correction parameters and generates a corrected view synthesized picture *Pred* (step Sa8). In this process, the view synthesized picture is input to a correction model to which the correction parameters are assigned. For example, when correction is performed using an offset value, the corrected view synthesized picture *Pred* is generated using the following Equation (24).
[Formula 24]

$$Pred[blk] = Syn[blk] + offset \qquad \cdots\cdots\cdots (24)$$

When the correction of the view synthesized picture of the block *blk* is completed, the encoding target frame *Org[blk]* is subjected to predictive encoding using the corrected view synthesized picture *Pred* as a predicted picture (step Sa9). That is, the prediction residual calculation unit 112 generates the difference between the encoding target frame *Org[blk]* and the corrected view synthesized picture *Pred* as a prediction residual, and the prediction residual encoding unit 109 encodes the prediction residual. Although any encoding method may be used, in a typical encoding technique such as H.264, the encoding is performed by applying DCT, quantization, binarization, and entropy encoding to the prediction residual.

A bitstream of an encoding result becomes an output of the multiview video encoding apparatus 100, it is decoded by the prediction residual decoding unit 110 for each block, and the decoded picture calculation unit 113 constructs a local decoded picture $Dee_{cur}[blk]$ by summing the decoding result and the corrected view synthesized picture *Pred.* The constructed local decoded picture is stored in the decoded picture memory 111 for use in subsequent prediction (step Sa10).

B. Second Embodiment

Next, a second embodiment of the present invention will be described.

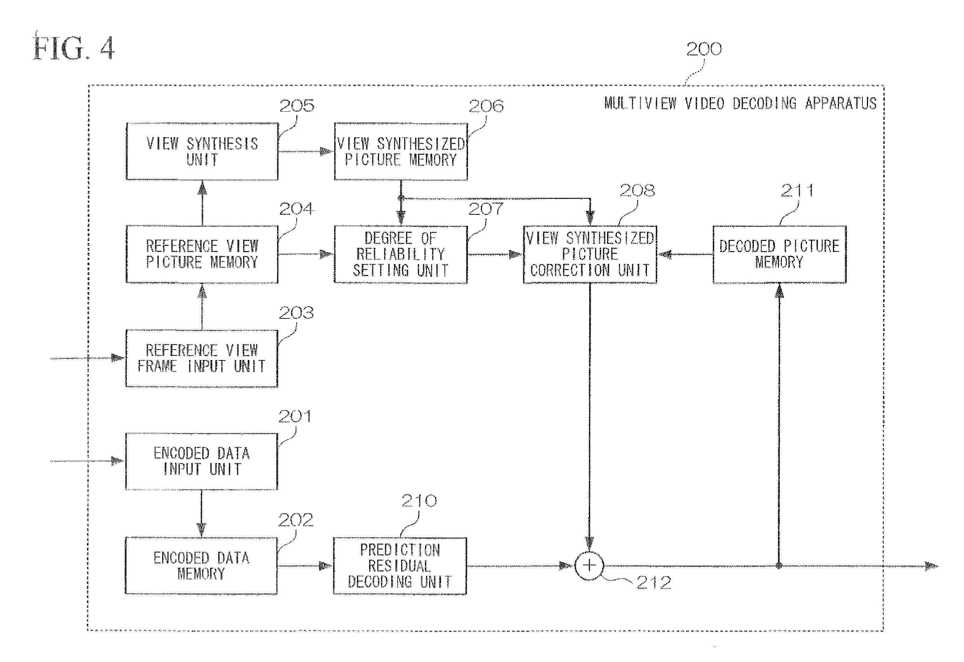

FIG. 4 is a block diagram illustrating a configuration of a multiview video decoding apparatus in the second embodiment. In FIG. 4, the multiview video decoding apparatus 200 is provided with an encoded data input unit 201, an encoded data memory 202, a reference view frame input unit 203, a reference view picture memory 204, a view synthesis unit 205, a view synthesized picture memory 206, a degree of reliability setting unit 207, a view synthesized picture correction unit 208, a prediction residual decoding unit 210, a decoded picture memory 211, and a decoded picture calculation unit 212.

The encoded data input unit 201 inputs encoded data of a video frame (decoding target frame) serving as a decoding target. The encoded data memory 202 stores the input encoded data. The reference view frame input unit 203 inputs a reference view frame, which is a video frame for a view different from that of the decoding target frame. The reference view picture memory 204 stores the input reference view frame. The view synthesis unit 205 generates a view synthesized picture for the decoding target frame using the reference view frame. The view synthesized picture memory 206 stores the generated view synthesized picture.

The degree of reliability setting unit 207 sets a degree of reliability for each pixel of the generated view synthesized picture. The view synthesized picture correction unit 208 corrects a mismatch between cameras of the view synthesized picture, and outputs a corrected view synthesized picture. The prediction residual decoding unit 210 decodes the difference between the decoding target frame and the corrected view synthesized picture from the encoded data as a prediction residual signal. The decoded picture memory 211 stores a decoded picture for the decoding target frame obtained by summing the decoded prediction residual signal and the corrected view synthesized picture at the decoded picture calculation unit 212.

It is to be noted that in the configuration of the multiview video decoding apparatus 200 described above, the reference view frame input unit 203, the reference view picture memory 204, the view synthesis unit 205, the view synthesized picture memory 206, the degree of reliability setting unit 207, the view synthesized picture correction unit 208, the prediction error decoding unit 210, and the decoded picture memory 211 are the same as the reference view frame input unit 103, the reference view picture memory 104, the view synthesis unit 105, the view synthesized picture memory 106, the degree of reliability setting unit 107, the view synthesized picture correction unit 108, the prediction error decoding unit 110, and the decoded picture memory 111 in the multiview video encoding apparatus 100, respectively, of the first embodiment.

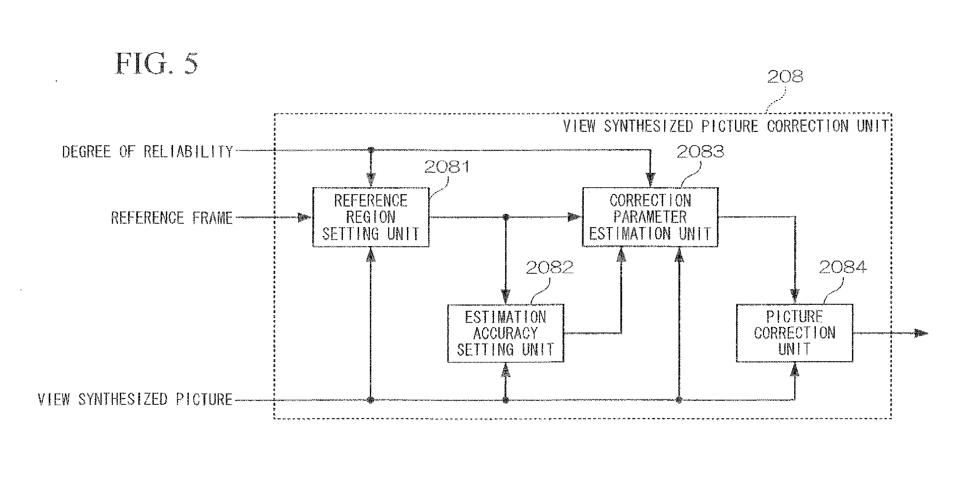

In addition, a configuration of the view synthesized picture correction unit 208 is the same as that of the view synthesized picture correction unit 108 (FIG. 2) of the multiview video encoding apparatus 100 of the above-described first embodiment. However, in the following, a description will be given using a reference region setting unit 2081, an estimation accuracy setting unit 2082, a correction parameter estimation unit 2083, and a picture correction unit 2084 as illustrated in FIG. 5.

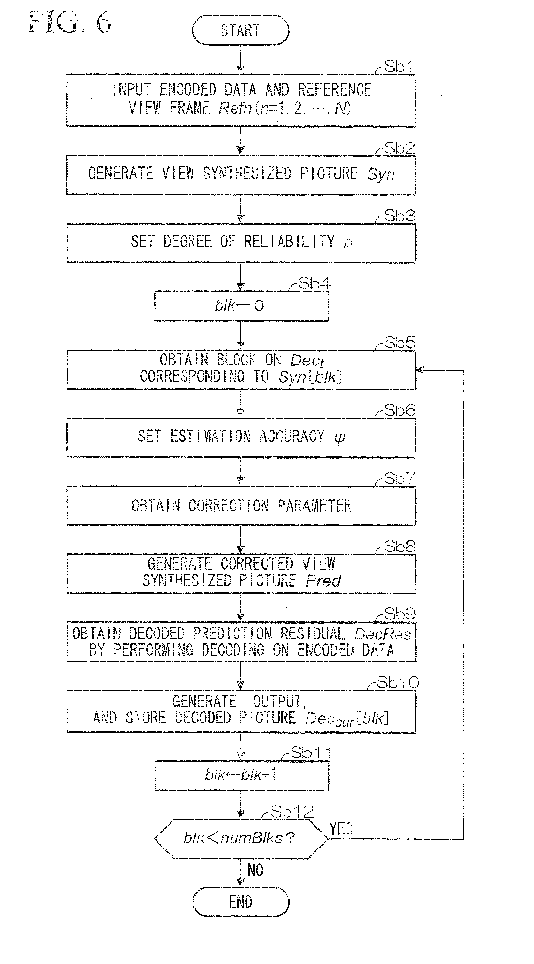

FIG. 6 is a flowchart describing an operation of the multiview video decoding apparatus 200 of the second embodiment. A process to be executed by the multiview video decoding apparatus 200 will be described in detail based on this flowchart.

First, encoded data of a decoding target frame is input by the encoding data input unit 201 and stored in the encoded data memory 202 (step Sb1). In addition, a reference view frame $Ref_n$ ($n$=1, 2, ..., N) taken at a reference view simultaneously with the decoding target frame is input by the reference view frame input unit 203, and stored in the reference view picture memory 204 (step Sb1)

Here, the input reference view frame is assumed to be a picture that has been decoded separately. In order to prevent encoding noise called drift from being generated, it is necessary to input the same reference view frame as that used at the encoding apparatus. However, if the generation of the encoding noise is allowed, a reference view frame different from that used at the encoding apparatus may be input. It is to be noted that $n$ is an index indicating a reference view and N is the number of available reference views.

Next, the view synthesis unit 205 synthesizes a picture taken at the same view simultaneously with the decoding target frame from information of the reference view frame, and stores the generated view synthesized picture *Syn* in the view synthesized picture memory 206 (step Sb2). The degree of reliability setting unit 207 then generates a degree of reliability p indicating the certainty that synthesis of each pixel of the view synthesized picture was able to be realized (step Sb3). These processes are the same as steps Sa2 and Sa3 of the first embodiment, respectively.

When the calculation of the degree of reliability ends, a video signal of the decoding target frame is decoded while the view synthesized picture correction unit 208 corrects the mismatch between cameras of the view synthesized picture for each pre-defined block (steps Sb4 to Sb12). That is, when an index of a decoding target block is denoted by *blk* and the total number of decoding target blocks is denoted by *numBlks,* after *blk* is initialized to 0 (step Sb4), the following process (steps Sb5 to Sb10 is iterated until *blk* reaches *numBlks* (step Sb12) while incrementing *blk* by 1 (step Sb11).

It is to be noted that if it is possible to perform the generation of the view synthesized picture and the calculation of the degrees of reliability for each decoding target block, these processes can also be performed as part of a process iterated for each decoding target block. For example, this includes the case in which depth information for the decoding target block is given. In addition, step Sb9 as will be described later may be performed in advance for all the blocks, rather than for each block, and its result may be stored and used. However, in such cases, a memory is required to store decoded prediction residual signals.

In the process iterated for each decoding target block, first, the reference region setting unit 2081 (approximately equal to the reference region setting unit 1081) finds a reference region *Ref[blk],* which is a block on a reference frame corresponding to the block *blk,* using the view synthesized picture (step Sb5). It is to be noted that the reference frame is data for which a decoding process has already ended and is stored in the decoded picture memory 211.

This process is the same as step Sa5 of the first embodiment. It is possible to prevent noise from being generated by employing a matching cost for a search, a method for determining a search target frame, and a method for generating a video signal for a reference region that are the same as those used at the encoding apparatus.

When the reference region *Ref[blk]* (=$Dec_t[blk+vec]$) is determined, the estimation accuracy setting unit 2082 (approximately equal to the estimation accuracy setting unit 1082) sets estimation accuracy $\psi$ indicating how accurately the reference region has been obtained for each pixel of the reference region *Ref[blk]* (step Sb6). Thereafter, the correction parameter estimation unit 2083 (approximately equal to the correction parameter estimation unit 1083) estimates correction parameters for correcting the view synthesized picture *Syn[blk]* (step Sb7). Next, the picture correction unit 2084 (approximately equal to the picture correction unit 1084) corrects the view synthesized picture for the block *blk* based on the correction parameters, and generates a corrected view synthesized picture *Pred* (step Sb8). These processes are the same as steps Sa6, Sa7, and Sa8 of the first embodiment, respectively.

When the correction of the view synthesized picture of the block *blk* is completed, the prediction error decoding unit 210 decodes a prediction residual signal for the block *blk* from the encoded data (step Sb9). The decoding process here is a process corresponding to an encoding technique. For example, when encoding is performed using a typical encoding technique such as H.264, decoding is performed by applying an inverse discrete cosine transform (IDCT), inverse quantization, multivalue processing, entropy decoding, and the like.

Finally, the decoded picture calculation unit 212 constructs a decoding target frame $Dee_{cur}[blk]$ by summing the obtained decoded prediction residual signal *DecRes* and the corrected view synthesized picture *Pred.* The constructed decoding target frame is stored in the decoded picture memory 211 for use in subsequent prediction, and it becomes an output of the multiview video decoding apparatus 200 (step Sb10

With the above-described first and second embodiments, a corresponding region on an already encoded frame for a currently processed region is obtained using a generated view synthesized picture, and illumination and/or color of the view synthesized picture is corrected using a video signal of the corresponding region in the encoded frame as a reference. Thereby, it is possible to perform correction to reduce a mismatch and to realize efficient multiview video encoding. In addition, a degree of reliability indicating the certainty of a synthesis process is set for each pixel of the view synthesized picture and a weight is assigned to a matching cost for each pixel based on the degree of reliability. By doing so, an accurately synthesized pixel is regarded as important, and an appropriate corresponding region can be set, without being affected by an error in view synthesis.

In addition, in step Sa5 of the first embodiment and step Sb5 of the second embodiment described above, a corresponding block on a reference frame corresponding to a view synthesized picture *Syn*[*blk*] of a processing target frame (encoding target frame or decoding target frame) is obtained using the reference frame *Dec.* However, if a view synthesized picture *RefSyn* of the reference frame can be obtained, a corresponding block may be obtained using the view synthesized picture *RefSyn,* instead of the reference frame *Dec.* That is, a corresponding block on the reference frame may be obtained by obtaining a pair of *(best_vec, best_t)* shown by Equation (9) using a matching cost in which *Dec* in Equations (5) to (8) is replaced with *RefSyn.* However, even in this case, a reference region *Ref* is generated using the reference frame *Dec.* If the view synthesis process is performed with high accuracy, the view synthesized picture *RefSyn* and the reference frame *Dec* are considered to be equal, and thus the advantageous effects of the embodiments of the present invention can be equally obtained even when a corresponding block is searched for using the view synthesized picture *RefSyn.*

When the view synthesized picture *RefSyn* is used, it is necessary to input a reference view frame taken at the same time as a reference frame and generate and store a view synthesized picture for the reference frame. However, when the encoding and decoding processes in the above-described embodiments are continuously applied to a plurality of frames, it is possible to prevent a view synthesized picture for the reference frame from being iteratively synthesized for each processing target frame, by continuously storing the view synthesized picture in the view synthesized picture memory while a frame that has been processed is stored in the decoded picture memory.

It is to be noted that because the processed frame stored in the decoded picture memory is not required in the corresponding region search (step Sa5 of the first embodiment and step Sb5 of the second embodiment) when the view synthesized picture *RefSyn* is used, it is not necessary to perform the corresponding region search process in synchronization with the encoding process or the decoding process. As a result, an advantageous effect can be obtained that parallel computation or the like can be performed and the entire computation time can be reduced.

In the above-described first and second embodiments, a view synthesized picture and a reference frame themselves are used. However, the accuracy of a corresponding region search is deteriorated due to the influence of noise such as film grain and encoding distortion generated in the view synthesized picture and/or the reference frame. Because the noise is a specific frequency component (particularly, a high frequency component), it is possible to reduce the influence of the noise by applying a band pass filter (a low pass filter when the noise is a high frequency) to a frame (picture) used in the corresponding region search and then performing the search.

In addition, if the accuracy of the corresponding region search has been deteriorated due to the influence of noise or the like, a spatial correlation between vectors designating corresponding regions is deteriorated. However, because the same object is photographed in a neighboring region in a normal video, it is possible to consider that the vectors are substantially the same between the regions, and a spatial correlation between the vectors designating the corresponding regions is very high. Therefore, an average value filter or a median filter may be applied to motion vectors estimated for respective blocks to increase the spatial correlation, thereby improving the accuracy of the corresponding region search.

Although the above-described first and second embodiments describe the case in which a processing target block and a block of a corresponding region search have the same size , it is obvious that these blocks need not have the same size. Because a temporal change of a video is non-linear, it is possible to more accurately predict a change of a video signal by finding a corresponding region for each small block. However, when a small block is used, a computation amount is increased and the influence of noise included in the video signal becomes large. In order to address this problem, it is also easily infer a process of, when a corresponding region for a small region is searched for, using several pixels around the small region for the search to reduce the influence of noise.

It is to be noted that although the above-described first and second embodiments describe the process of encoding or decoding one frame of one camera, it is possible to realize encoding or decoding of multiview moving pictures by iterating this process for each frame. Furthermore, it is possible to realize encoding or decoding of multiview moving pictures of a plurality of cameras by iterating the process for each camera.

As described above, in the embodiments of the present invention, correction parameters are obtained using the assumption that mismatches in color and illumination that are dependent on an object does not temporally have a large change. Thus, when a scene abruptly changes due to a scene change or the like, a mismatch temporally changes. In this case, in the embodiments of the present invention, there is a possibility that an appropriate correction parameter cannot be estimated, and the difference between a view synthesized picture and a processing target frame is increased by the correction. Therefore, the view synthesized picture may be corrected only if it is determined that an abrupt change in a video is absent by determining the presence or absence of the abrupt change such as a scene change. It is to be noted that as a method for determining such an abrupt change in a video, it is possible to use a method for checking the value of a degree of divergence of a corresponding region obtained as a result of a corresponding region search and for determining that an abrupt change in the video has occurred if the degree of divergence is greater than or equal to a constant degree.

The above-described process can also be realized by a computer and a software program. In addition, it is also possible to provide the program by recording the program on a computer-readable recording medium and to provide the program over a network.

In addition, the above-described embodiments mainly describe a multiview video encoding apparatus and a multiview video decoding apparatus. However, a multiview video encoding method and a multiview video decoding method of the present invention can be realized by steps corresponding to operations of respective units of the multiview video encoding apparatus and the multiview video decoding apparatus.

Although the embodiments of the present invention have been described above with reference to the drawings, these embodiments are exemplary of the present invention, and it is apparent that the present invention is not limited to these embodiments. Therefore, additions, omissions, substitutions, and other modifications of constituent elements can be made without departing from the spirit and scope of the present invention.

INDUSTRIAL APPLICABILITY

For example, the present invention is used to encode and decode a multiview picture and multiview moving pictures. With the present invention, it is possible to realize efficient encoding/decoding of a multiview picture and multiview moving pictures without additional encoding/decoding of correction parameters even when mismatches in illumination and/or color between cameras is generated locally.

Description of Reference Numerals

100    Multiview video encoding apparatus

101    Encoding target frame input unit

102    Encoding target picture memory

103    Reference view frame input unit

104    Reference view picture memory

105    View synthesis unit

106    View synthesized picture memory

107    Degree of reliability setting unit

108    View synthesized picture correction unit

109    Prediction residual encoding unit

110    Prediction residual decoding unit

111    Decoded picture memory

112    Prediction residual calculation unit

113    Decoded picture calculation unit

1081    Reference region setting unit

1082    Estimation accuracy setting unit

1083    Correction parameter estimation unit

1084    Picture correction unit

200     Multiview video decoding apparatus

201     Encoded data input unit

202     Encoded data memory

203     Reference view frame input unit

204     Reference view picture memory

205     View synthesis unit

206     View synthesized picture memory

207     Degree of reliability setting unit

208     View synthesized picture correction unit

210     Prediction residual decoding unit

211     Decoded picture memory

212     Decoded picture calculation unit

**Claims**

1. A multiview video encoding method for encoding a multiview video, the method comprising:

   a view synthesized picture generation step of synthesizing, from an already encoded reference view frame taken at a reference view different from an encoding target view of the multiview video simultaneously with an encoding target frame at the encoding target view, a view synthesized picture corresponding to the encoding target frame at the encoding target view;
   a reference region estimation step of searching for a reference region on an already encoded reference frame at the encoding target view corresponding to the view synthesized picture for each processing unit region having a predetermined size;
   a correction parameter estimation step of estimating a correction parameter for correcting a mismatch between cameras from the view synthesized picture for the processing unit region and the reference frame for the reference region;
   a view synthesized picture correction step of correcting the view synthesized picture for the processing unit region using the estimated correction parameter; and
   a picture encoding step of performing predictive encoding of a video at the encoding target view using the corrected view synthesized picture.

2. The multiview video encoding method according to claim 1, further comprising a degree of reliability setting step of setting a degree of reliability indicating certainty of the view synthesized picture for each pixel of the view synthesized picture,
   wherein the reference region estimation step assigns a weight to a matching cost of each pixel when the reference region on the reference frame corresponding to the view synthesized picture is searched for, based on the degree of reliability.

3. The multiview video encoding method according to claim 2, wherein the correction parameter estimation step assigns a weight to a matching cost of each pixel when the correction parameter is estimated, based on the degree of reliability.

4. The multiview video encoding method according to claim 2, further comprising an estimation accuracy setting step of setting estimation accuracy indicating whether or not the reference region has been accurately estimated for each pixel of the view synthesized picture,
   wherein the correction parameter estimation step assigns a weight to a matching cost of each pixel when the correction parameter is estimated, based on any one or both of the estimation accuracy and the degree of reliability.

**5.** A multiview video decoding method for decoding a multiview video, the method comprising:

a view synthesized picture generation step of synthesizing, from a reference view frame taken at a reference view different from a decoding target view of the multiview video simultaneously with a decoding target frame at the decoding target view, a view synthesized picture corresponding to the decoding target frame at the decoding target view;

a reference region estimation step of searching for a reference region on an already decoded reference frame at the decoding target view corresponding to the view synthesized picture for each processing unit region having a predetermined size;

a correction parameter estimation step of estimating a correction parameter for correcting a mismatch between cameras from the view synthesized picture for the processing unit region and the reference frame for the reference region;

a view synthesized picture correction step of correcting the view synthesized picture for the processing unit region using the estimated correction parameter; and

a picture decoding step of decoding a decoding target frame subjected to predictive encoding at the decoding target view from encoded data of a video at the decoding target view using the corrected view synthesized picture as a prediction signal.

**6.** The multiview video decoding method according to claim 5, further comprising a degree of reliability setting step of setting a degree of reliability indicating certainty of the view synthesized picture for each pixel of the view synthesized picture,

wherein the reference region estimation step assigns a weight to a matching cost of each pixel when the reference region on the reference frame corresponding to the view synthesized picture is searched for, based on the degree of reliability.

**7.** The multiview video decoding method according to claim 6, wherein the correction parameter estimation step assigns a weight to a matching cost of each pixel when the correction parameter is estimated, based on the degree of reliability.

**8.** The multiview video decoding method according to claim 6, further comprising an estimation accuracy setting step of setting estimation accuracy indicating whether or not the reference region has been accurately estimated for each pixel of the view synthesized picture,

wherein the correction parameter estimation step assigns a weight to a matching cost of each pixel when the correction parameter is estimated, based on any one or both of the estimation accuracy and the degree of reliability.

**9.** A multiview video encoding apparatus for encoding a multiview video, the apparatus comprising:

a view synthesized picture generation means for synthesizing, from an already encoded reference view frame taken at a reference view different from an encoding target view of the multiview video simultaneously with an encoding target frame at the encoding target view, a view synthesized picture corresponding to the encoding target frame at the encoding target view;

a reference region estimation means for searching for a reference region on an already encoded reference frame at the encoding target view corresponding to the view synthesized picture synthesized by the view synthesized picture generation means for each processing unit region having a predetermined size;

a correction parameter estimation means for estimating a correction parameter for correcting a mismatch between cameras from the view synthesized picture for the processing unit region and the reference frame for the reference region searched for by the reference region estimation means;

a view synthesized picture correction means for correcting the view synthesized picture for the processing unit region using the correction parameter estimated by the correction parameter estimation means; and

a picture encoding means for performing predictive encoding of a video at the encoding target view using the view synthesized picture corrected by the view synthesized picture correction means.

**10.** The multiview video encoding apparatus according to claim 9, further comprising a degree of reliability setting means for setting a degree of reliability indicating certainty of the view synthesized picture for each pixel of the view synthesized picture synthesized by the view synthesized picture generation means,

wherein the reference region estimation means assigns a weight to a matching cost of each pixel when the reference region on the reference frame corresponding to the view synthesized picture is searched for, based on the degree of reliability set by the degree of reliability setting means.

11. The multiview video encoding apparatus according to claim 10, wherein the correction parameter estimation means assigns a weight to a matching cost of each pixel when the correction parameter is estimated, based on the degree of reliability set by the degree of reliability setting means.

12. The multiview video encoding apparatus according to claim 10, further comprising an estimation accuracy setting means for setting estimation accuracy indicating whether or not the reference region has been accurately estimated for each pixel of the view synthesized picture synthesized by the view synthesized picture generation means, wherein the correction parameter estimation means assigns a weight to a matching cost of each pixel when the correction parameter is estimated, based on any one or both of the estimation accuracy set by the estimation accuracy setting means and the degree of reliability set by the degree of reliability setting means.

13. A multiview video decoding apparatus for decoding a multiview video, the apparatus comprising:

a view synthesized picture generation means for synthesizing, from a reference view frame taken at a reference view different from a decoding target view of the multiview video simultaneously with a decoding target frame at the decoding target view, a view synthesized picture corresponding to the decoding target frame at the decoding target view;
a reference region estimation means for searching for a reference region on an already decoded reference frame at the decoding target view corresponding to the view synthesized picture synthesized by the view synthesized picture generation means for each processing unit region having a predetermined size;
a correction parameter estimation means for estimating a correction parameter for correcting a mismatch between cameras from the view synthesized picture for the processing unit region and the reference frame for the reference region searched for by the reference region estimation means;
a view synthesized picture correction means for correcting the view synthesized picture for the processing unit region using the correction parameter estimated by the correction parameter estimation means; and
a picture decoding means for decoding a decoding target frame subjected to predictive encoding at the decoding target view from encoded data of a video at the decoding target view using the view synthesized picture corrected by the view synthesized picture correction means as a prediction signal.

14. A program for causing a computer of a multiview video encoding apparatus for encoding a multiview video to execute:

a view synthesized picture generation function of synthesizing, from an already encoded reference view frame taken at a reference view different from an encoding target view of the multiview video simultaneously with an encoding target frame at the encoding target view, a view synthesized picture corresponding to the encoding target frame at the encoding target view;
a reference region estimation function of searching for a reference region on an already encoded reference frame at the encoding target view corresponding to the view synthesized picture for each processing unit region having a predetermined size;
a correction parameter estimation function of estimating a correction parameter for correcting a mismatch between cameras from the view synthesized picture for the processing unit region and the reference frame for the reference region;
a view synthesized picture correction function of correcting the view synthesized picture for the processing unit region using the estimated correction parameter; and
a picture encoding function of performing predictive encoding of a video at the encoding target view using the corrected view synthesized picture.

15. A program for causing a computer of a multiview video decoding apparatus for decoding a multiview video to execute:

a view synthesized picture generation function of synthesizing, from a reference view frame taken at a reference view different from a decoding target view of the multiview video simultaneously with a decoding target frame at the decoding target view, a view synthesized picture corresponding to the decoding target frame at the decoding target view;
a reference region estimation function of searching for a reference region on an already decoded reference frame at the decoding target view corresponding to the view synthesized picture for each processing unit region having a predetermined size;
a correction parameter estimation function of estimating a correction parameter for correcting a mismatch between cameras from the view synthesized picture for the processing unit region and the reference frame for the reference region;

a view synthesized picture correction function of correcting the view synthesized picture for the processing unit region using the estimated correction parameter; and

a picture decoding function of decoding a decoding target frame subjected to predictive encoding at the decoding target view from encoded data of a video at the decoding target view using the corrected view synthesized picture as a prediction signal.

FIG. 1

FIG. 2

EP 2 541 943 A1

FIG. 3

START

INPUT ENCODING TARGET FRAME *Org* AND REFERENCE VIEW FRAME *Ref_n* ($n$=1, 2, ⋯, $N$) — Sa1

GENERATE VIEW SYNTHESIZED PICTURE *Syn* — Sa2

SET DEGREE OF RELIABILITY $\rho$ — Sa3

$blk \leftarrow 0$ — Sa4

OBTAIN BLOCK ON *Dec_t* CORRESPONDING TO *Syn[blk]* — Sa5

SET ESTIMATION ACCURACY $\psi$ — Sa6

OBTAIN CORRECTION PARAMETER — Sa7

GENERATE CORRECTED VIEW SYNTHESIZED PICTURE *Pred* — Sa8

PERFORM PREDICTIVE ENCODING OF *Org[blk]* USING *Pred* AS PREDICTED PICTURE — Sa9

GENERATE AND STORE LOCAL DECODED PICTURE *Dec_cur[blk]* — Sa10

$blk \leftarrow blk+1$ — Sa11

$blk < numBlks$ ? — Sa12

YES

NO

END

FIG. 4

200

MULTIVIEW VIDEO DECODING APPARATUS

205 VIEW SYNTHESIS UNIT

206 VIEW SYNTHESIZED PICTURE MEMORY

204 REFERENCE VIEW PICTURE MEMORY

207 DEGREE OF RELIABILITY SETTING UNIT

208 VIEW SYNTHESIZED PICTURE CORRECTION UNIT

211 DECODED PICTURE MEMORY

203 REFERENCE VIEW FRAME INPUT UNIT

201 ENCODED DATA INPUT UNIT

202 ENCODED DATA MEMORY

210 PREDICTION RESIDUAL DECODING UNIT

212

EP 2 541 943 A1

FIG. 5

VIEW SYNTHESIZED PICTURE CORRECTION UNIT

208

DEGREE OF RELIABILITY

REFERENCE FRAME

VIEW SYNTHESIZED PICTURE

REFERENCE REGION SETTING UNIT  2081

ESTIMATION ACCURACY SETTING UNIT  2082

CORRECTION PARAMETER ESTIMATION UNIT  2083

PICTURE CORRECTION UNIT  2084

EP 2 541 943 A1

## FIG. 6

START

INPUT ENCODED DATA AND REFERENCE
VIEW FRAME $Refn$ $(n=1, 2, \cdots, N)$ — Sb1

GENERATE VIEW SYNTHESIZED PICTURE $Syn$ — Sb2

SET DEGREE OF RELIABILITY $\rho$ — Sb3

$blk \leftarrow 0$ — Sb4

OBTAIN BLOCK ON $Dec_t$
CORRESPONDING TO $Syn[blk]$ — Sb5

SET ESTIMATION ACCURACY $\psi$ — Sb6

OBTAIN CORRECTION PARAMETER — Sb7

GENERATE CORRECTED VIEW
SYNTHESIZED PICTURE $Pred$ — Sb8

OBTAIN DECODED PREDICTION RESIDUAL $DecRes$
BY PERFORMING DECODING ON ENCODED DATA — Sb9

GENERATE, OUTPUT,
AND STORE DECODED PICTURE $Dec_{cur}[blk]$ — Sb10

$blk \leftarrow blk+1$ — Sb11

$blk < numBlks$ ? — Sb12
YES

NO

END

FIG. 7

OBJECT

DEPTH

DISPARITY

PICTURE PLANE

DISPARITY VECTOR

VIEW POSITION OF CAMERA 2

VIEW POSITION OF CAMERA 1

## INTERNATIONAL SEARCH REPORT

| International application No. |
|---|
| PCT/JP2011/053742 |

A. CLASSIFICATION OF SUBJECT MATTER
*H04N13/00*(2006.01)i, *H04N7/32*(2006.01)i

According to International Patent Classification (IPC) or to both national classification and IPC

B. FIELDS SEARCHED

Minimum documentation searched (classification system followed by classification symbols)
H04N13/00, H04N7/32

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | WO 2008/048487 A2 (THOMSON LICENSING),<br>24 April 2008 (24.04.2008),<br>page 8, line 10 to page 18, line 33;<br>fig. 1 to 4<br>& JP 2010-507334 A & US 2010/0027881 A1<br>& EP 2082584 A2 | 1,5,9,13-15<br>2-4,6-8,<br>10-12 |
| A | JP 2009-523355 A (LG Electronics Inc.),<br>18 June 2009 (18.06.2009),<br>entire text; all drawings<br>& US 2007/0177671 A1 | 2-4,6-8,<br>10-12 |
| A | WO 2009/001791 A1 (Nippon Telegraph And<br>Telephone Corp.),<br>31 December 2008 (31.12.2008),<br>entire text; all drawings<br>& US 2010/0189177 A1 & EP 2161937 A1 | 2-4,6-8,<br>10-12 |

☐ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>27 April, 2011 (27.04.11) | Date of mailing of the international search report<br>17 May, 2011 (17.05.11) |
|---|---|
| Name and mailing address of the ISA/<br>Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• JP 2010038680 A

### Non-patent literature cited in the description

• Advanced video coding for generic audiovisual services. *Rec. ITU-T H.264,* March 2009
• **S. SHIMIZU ; M. KITAHARA ; H. KIMATA ; K. KAMIKURA ; Y. YASHIMA.** View Scalable Multiview Video Coding Using 3-D Warping with Depth Map. *IEEE Transactions on Circuits and System for Video Technology,* November 2007, vol. 17 (11), 1485-1495
• **K. YAMAMOTO ; M. KITAHARA ; H. KIMATA ; T. YENDO ; T. FUJII ; M. TANIMOTO ; S. SHIMIZU ; K. KAMIKURA ; Y. YASHIMA.** Multiview Video Coding Using View Interpolation and Color Correction. *IEEE Transactions on Circuits and System for Video Technology,* November 2007, vol. 17 (11), 1436-1449
• **S. SHIMIZU ; H. KIMATA ; Y. OHTANI.** Adaptive Appearance Compensated View Synthesis Prediction for Multiview Video Coding. *Proceedings of ICIP2009,* November 2009, 2949-2952

• **Y. MORI ; N. FUKUSHIMA ; T. FUJII ; M. TANIMOTO.** View Generation with 3D Warping Using Depth Information for FTV. *Proceedings of 3DTV CON2008,* May 2008, 229-232
• **S. YEA ; A. VETRO.** View Synthesis Prediction for Rate-Overhead Reduction in FTV. *Proceedings of 3DTV-CON2008,* May 2008, 145-148
• **J. SUN ; N. ZHENG ; H. SHUM.** Stereo Matching Using Belief Propagation. *IEEE Transactions on Pattern Analysis and Machine Intelligence,* July 2003, vol. 25 (7), 787-800
• **S. SHIMIZU ; Y TONOMURA ; H. KIMATA ; Y. OHTANI.** Improved View Interpolation Prediction for Side Information in Multiview Distributed Video Coding. *Proceedings of ICDSC,* August 2009